# EUROPEAN PATENT APPLICATION

(11) **EP 1 838 094 A2**
(43) Date of publication of application: **26.09.2007**
(21) Application number: 07104578.5
(22) Date of filing: 21.03.2007
(51) Int. Cl.: H04N 5/445

(54) **Display Apparatus**

(30) Priority: 22.03.2006 JP 2006079781
(71) Applicant: MATSUSHITA ELECTRIC INDUSTRIAL CO., LTD, Kadoma-shi, Osaka 571-8501 (JP)
(72) Inventor: Nakagawa, Seiichi c/o Matsushita Electric Industrial Co., Ltd., Chuo-ku, Osaka-shi Osaka 540-6319 (JP); Umei, Toshitomo c/o Matsushita Electric Industrial Co., Ltd., Chuo-ku, Osaka-shi Osaka 540-6319 (JP); Kuwabara, Takashi c/o Matsushita Electric Industrial Co., Ltd., Chuo-ku, Osaka-shi Osaka 540-6319 (JP); Konno, Shunsuke c/o Matsushita Electric Industrial Co., Ltd., Chuo-ku, Osaka-shi Osaka 540-6319 (JP)
(74) Representative: Grünecker, Kinkeldey, Stockmair & Schwanhäusser Anwaltssozietät

(57) **Abstract**

A display apparatus (100) comprises: a video selection section (105) that selects video based on the outputs of a video 1 detection section (111), video 2 detection section (112), mode management section (104), seat sensor (301) and seat sensor (302); two screen combining section (106) that combines the screens of video 1 and video 2 inputted from video input terminals (101 and 102) based on in accordance with control signal from the video selection section (105); and a landscape LCD panel (120) that displays the video signals outputted from the two screen combining section (106), and displays video inputted to the video input terminals (101 and 102) in a full screen or in two left and right screens on the landscape LCP panel, in accordance with detection results in the video 1 detection section (111) and video 2 detection section (112). For example, the single-screen display and dual-screen display are automatically switched by plugging in and unplugging connection cables (510 and 520).

## Description

### BACKGROUND OF THE INVENTION

### 1. Field of the Invention

The present invention relates to a display apparatus capable of displaying a plurality of video, and, more particularly, to a display apparatus that displays video inside the interior of a vehicle.

### 2. Description of the Related Art

In recent years, with the progress of digital technologies communication technologies, a wide variety of vehicle-mounted electronic devices have been made. In particular, display apparatuses, such as navigation systems, DVD (Digital Versatile Disk) players, and television receivers that utilize a display, such as an LCD, to display videos recorded on a recording medium such as a CD-ROM or DVD or the images of television broadcasting have become widely popular.

Further, with the development of luxurious and large-sized vehicles in recent years, there are even vehicle-mounted apparatus with two display apparatuses connected.

With such apparatus, for example, by providing one display apparatus between the driver's seat and the front passenger's seat and providing the other display apparatus in front of the backseats, not only the driver and the passenger in the front passenger seat, but also the passengers in the backseats are able to view various information displayed on a display apparatus.

For example, Japanese Patent Application Laid-Open No. 2004-317412 discloses a vehicle-mounted apparatus that is provided with a device identifying section that identifies an operation device and an image signal output section that outputs image signals in accordance with the operation device, and that the backseats passengers in a vehicle are able to operate at ease by operating an arbitrary operation device.

Nevertheless, with such conventional vehicle-mounted display apparatuses, switching single-screen display and dual-screen display requires user operations, thereby raising a problem of poor operability.

That is, now that vehicle-mounted display apparatus has increased in size and improved in resolution, two or more display screens can be displayed on a display apparatus, thereby making it possible to, for example, display a television screen on one display screen and DVD image on the other display screen. In this case, video inputs need to be switched using button switches provided on the display apparatus or using a remote control device. However, to operate these button switches, the user often finds it difficult to see the positions and is required to be in awkward postures. Taking into consideration that such operations take place in the narrow space of the backseats and inside a vehicle where it is relatively dark for the purpose of safe driving and that children and elderly are likely to be frequent viewers, it is desirable if screen displays can be switched by simpler operations. Allowing passengers seated in the backseats to execute screen display operations in simple operations may also help the driver from losing concentration.

### SUMMARY OF THE INVENTION

It is therefore an object of the present invention to provide a display apparatus capable of switching display screens quickly and at ease in accordance with the viewers seated in the backseats of a vehicle.

The display apparatus of the present invention employs a configuration having: a display section that is installed in an interior of a vehicle and that displays video on a display screen; a video input terminal that receives as input a plurality of videos; a video input detection section that detects a video input in the video input terminal; and a control section that, in accordance with a detection result in the video input detection section, displays at least one of the videos inputted to the video input terminal in a full screen or in a split screen on the display screen.

The present invention allows viewers seated in the backseats of a vehicle to switch display screens quickly and at ease, and view DVD, television, etc., on a large screen that the viewers in the backseats are able to view comfortably.

### BRIEF DESCRIPTION OF THE DRAWINGS

FIG.1 is a pattern diagram of the exterior configuration of a display apparatus according to an embodiment of the present invention;
FIG.2 is a block diagram showing a configuration of the display apparatus of the above embodiment;
FIG.3 is diagram showing a specific configuration of the display apparatus of the above embodiment; and
FIG.4 is a flowchart showing an automatic dual-screen processing program of the display apparatus of the above embodiment.

### DESCRIPTION OF THE PREFERRED EMBODIMENTS

Now, embodiments of the present invention will be described in detail with reference to the accompanying drawings.

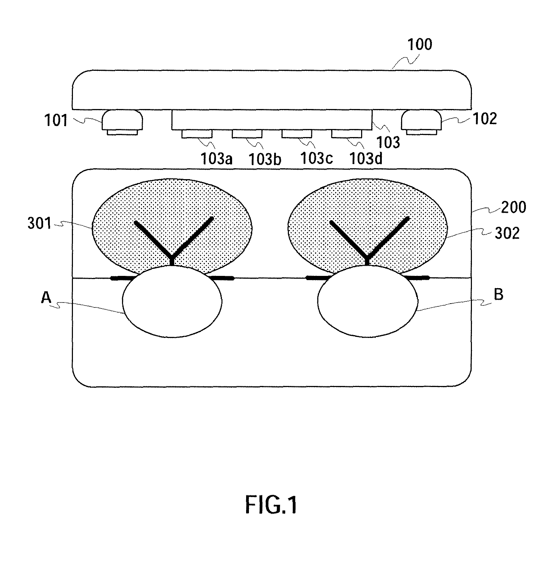

FIG.1 is a diagram showing the exterior configuration of a display apparatus according to an embodiment of the present invention, and a pattern diagram showing the vehicle from the rear, from above. The present embodiment is an example of applying a display apparatus capable of displaying a plurality of videos as a display apparatus for the backseats of a vehicle.

In FIG.1, 100 designates the display apparatus for the backseats, installed inside the interior of a vehicle, 200 designates the backseats where backseats passengers A and B who view the display screen of display apparatus 100 are seated, and 301 and 302 designate seat sensors that are installed in backseats 200 and that detect the seated state of backseats passengers A and B.

Display apparatus 100 comprises, for example, a large-size LCD panel and is installed in a location that is viewable by backseats passengers A and B seated in rear backseats 200. Display apparatus 100 is fixed near the center of the ceiling inside the vehicle, for example, to allow people seated in the backseats to enjoy video. Display apparatus 100 comprises an ultra-wide LCD display that is not normally used in typical display apparatus. With a larger-size LCD panel, naturally, people seated in the backseats are able to view video more comfortably. However, the user's rear view must not be obstructed, and, as a solution, a new, vehicle-mounted ultra wide LCD display is presently developed and employed. Furthermore, a wide LCD display is particularly suitable to cases where two or more screens are displayed side by side. A video playback device such as a television tuner, VTR player, DVD player, car navigation system, etc, is connected to display apparatus 100, thereby allowing backseats passengers A and B to enjoy video and audio. In FIG.1, display apparatus 100 comprises video input terminal 101 that is formed with terminal D, for example, and that receives as input video source 1 (hereinafter "video 1"), video input terminal 102 that is formed with a composite terminal, for example, and that receives as input video source 2 (hereinafter "video 2"), and operation section 103 that is formed with single-screen display button 103a for video 1, single-screen display button 103b for video 2, dual-screen display button 103c, and automatic detection button 103d.

Video input terminals 101 and 102 are video input terminals that are installed on display apparatus 100 (in the lower part of the case, for example) and that receives as input video sources. As long as capable of receiving as input video signals, any video input terminal can be used, an example being a D terminal. Terminals capable of receiving as input video signals on channels capable of video transmission, such as RCA composite terminals, HDMI terminals, analog RGB terminals, DVI terminals, and USB terminals, are similarly applicable.

Operation section 103 has four buttons 103a to 103d that can distinguish between "single-screen display of video 1", "single-screen display of video 2", "dual-screen display", and "auto detection", and has, in addition, various operation buttons and switches. For example, operations such as switching the television channel, playing a DVD, and adjusting the sound are performed using the applicable buttons of operation section 103. Further, although not shown, the audio accompanying the displayed video of display apparatus 100 installed for the backseats is outputted to speakers inside the vehicle interior or to headphones or earphones worn by backseats passengers A and B.

Display apparatus 100 may be installed in a variety of ways. For example, it may be hanged from the ceiling inside the vehicle, embedded in the headrest or the back of the front seat, or installed on the console box or on the floor. In any case, installation is based on the major premise that the rear view of the driver is not obstructed. People seated in the backseats perform operations such as selecting the type of video to be played, switching the channels, and adjusting the screen angles, positions, and audio using the operation buttons of operation section 103.

Seat sensors 301 and 302 comprise contact switches, etc., installed in the backseats of the vehicle, and generate a seated detection signal when a passenger sits in a seat, transmitting the signal as seated state information, to display apparatus 100. A plurality of seat sensors 301 and 302 (two in the present embodiment) are arranged in the length direction of backseats 200, so that the seated location of each passenger can be detected. Needless to say, three or more seat sensors 301 and 302 may be installed. Further, devices such as piezoelectric element based pressure sensors, weight sensors, body detection sensors based on radiant temperature detection inside the vehicle interior, or monitoring cameras that monitor the state inside the vehicle interior by video may be used in place of the seat sensors comprising contact switches, etc. Furthermore, seat sensor 301 may be a switch (such as a contact switch) that is installed in a seat belt part to detect whether or not passenger (viewer) A is seated on the left side of the seats by detecting whether or not the seat belt is worn. Similarly, seat sensor 302 maybe a switch (such as a contact switch) that is installed in a seat belt part to detect whether or not passenger (viewer) B is seated on the right of the seats by detecting whether or not the seat belt is worn.

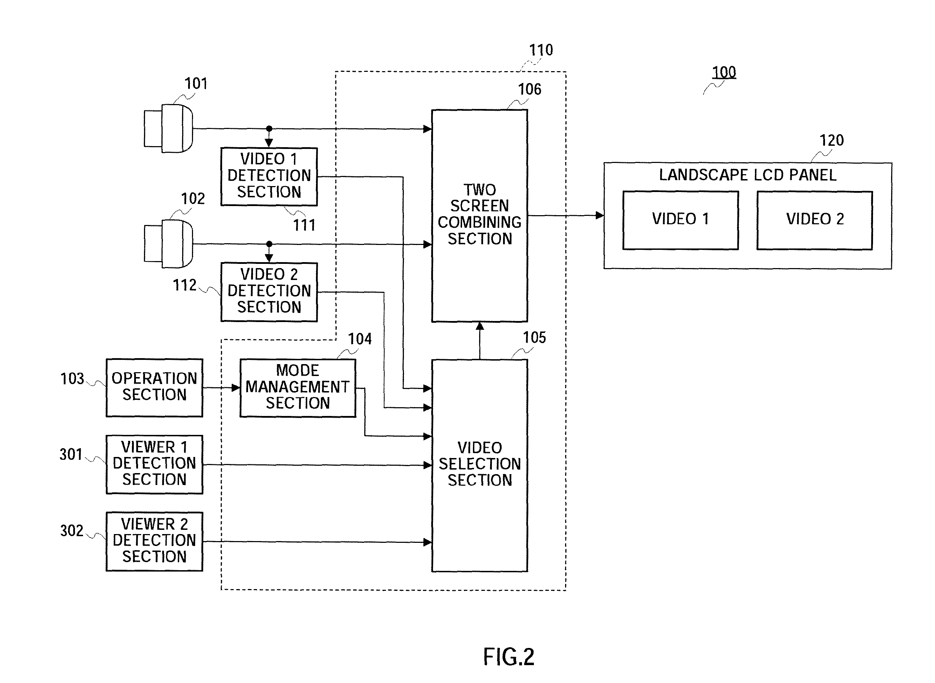

FIG.2 is a block diagram showing the configuration of the above display apparatus 100.

In FIG.2, display apparatus 100 comprises: video input terminal 101 (video 1 input section) that receives as input video 1; video input terminal 102 (video 2 input section) that receives as input video 2; video 1 detection section 111 that detects the input signal of video 1 inputted to video input terminal 101; video 2 detection section 112 that detects the input signal of video 2 inputted to video input terminal 102; operation section 103 that outputs operation information such as the press of a button switch; mode management section 104 that manages four modes "video 1", "video 2", "dual-screen", and "auto," based on the selections of the buttons of operation section 103; seat sensor 301 that detects the seated state of a passenger on the left side of the backseats; seat sensor 302 that detects the seated state of a passenger on the right side of the backseats; video selection section 105 that selects video based on the output of video 1 detection section 111, video 2 detection section 112, mode management section 104, seat sensor 301, and seat sensor 302; two screen combining section 106 that combines the screens of videos 1 and 2 inputted from video input terminals 1 and 2 in accordance with the control signal of video selection section 105; and landscape LCD panel 120 that displays the video signals outputted from two screen combining section 106. splay apparatus 100 further comprises a loudspeaker (not shown). Furthermore, display apparatus 100 may further comprise a microphone for speech input and a speech signal processing section and a speech recognition section for digital signal processing of received signals and speech signals inputted from the microphone, thereby enabling operation by speech input.

The above mode management section 104, video selection section 105, and two screen combining section 106 comprise control section 110 comprising a CPU, etc., wherein control section 110 performs video selection and automatic dual-screen control of combining two screens based on the detection of the connection or removal of the video input terminals by video 1 detection section 111 and video 2 detection section 112.

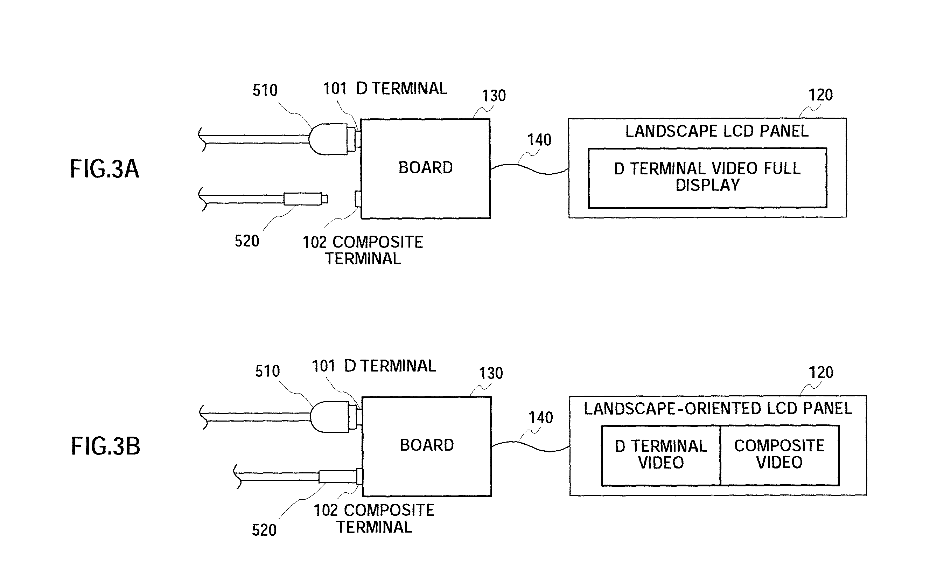

Video input terminals 101 and 102 are video 1 and 2 input sections and are provided on display apparatus 100. Connection cables 510 and 520 shown in FIG.3 (described later) are connected to video input terminals 101 and 102 in a detachable manner. In the present embodiment, an example will be employed where video input terminal 101 (video 1 input section) is a D terminal and video input terminal 102 (video 2 input section) is a composite terminal. However, video input terminals 101 and 102 may be any type of video input terminal that receives as input video signals from channels capable of video transmission, with which connection cables 510 and 520 can be attached and detached at ease, and terminals such as RCA composite terminals, HDMI terminals, analog RGB terminals, DVI terminals, or USB terminals may also be similarly applied. Further, two or more video input terminals (video input sections) may be provided using arbitrary video input terminal types as well as combinations.

Video 1 detection section 111 detects the input signal of video 1 inputted from video input terminal 101, holds the detection state inside, and reports it as an event to video selection section 105. Video 2 detection section 112 detects the input signal of video 2 inputted from video input terminal 102, holds the detection state inside, and reports it as an event to video selection section 105.

Operation section 103 comprises single-screen display buttons 103a and 103b, dual-screen display button 103c, auto detection button 103d, and various operation buttons and switches, and outputs operation information such as the press of a button or switch, to mode management section 104.

Mode management section 104 switches the internal states by selecting single-screen display button 103a/103b, dual-screen display button 103c, or auto detection button 103d of operation section 103, and holds inside one of the four modes "video 1", "video 2", "dual screen" or "auto", and reports it as an event to video selection section 105.

Seat sensor 301 is the viewer 1 detection section and detects whether or not passenger (viewer) A is seated on the left side of the backseats. Seat sensor 302 is the viewer 2 detection section and detects whether or not passenger (viewer) B is seated on the right side of the backseats.

Video selection section 105 selects video based on the outputs of video 1 detection section 111, video 2 detection section 112, mode management section 104, seat sensor 301 (viewer 1 detection section), and seat sensor 302 (viewer 2 detection section).

Two screen combining section 106 combines the screens for videos 1 and 2 inputted from video input terminals 101 and 102, in accordance with the control signal from video selection section 105.

Landscape LCD panel 120 comprises an LCD display of a dot matrix structure. An organic EL display apparatus, PDP apparatus, CRT display apparatus, or projector-type display apparatus may be used in place of the LCD display. Landscape LCD panel 120 displays various screens for the passengers in the backseats, such as icons that indicate the operation states of the display functions. Further, in remote control function mode and in video output function mode, various operation information and audio volume adjustment GUI are displayed.

Further, landscape LCD panel 120 may be an LCD display of a dot matrix structure with a laminated touch panel capable of touch input. The touch panel is provided on the surface of Landscape LCD panel 120 and the effective section of the touch panel is equivalent to the full display section of landscape LCD panel 120. By touching the touch panel, the user can set settings such as screen switching settings.

FIG.3 shows specific configurations of the above display apparatus 100, with FIG. 3 (A) showing a case where a connection cable is not connected to one terminal, and FIG.3(B) showing a case where connection cables are connected to both terminals.

In FIG.3, video input terminal 101 (video 1 input section) is a D terminal and video input terminal 102 (video 2 input section) is a composite terminal, and both mounted on the I/O interface of board 130 of display apparatus 100. On board 130, members constituting video 1 detection sections 111 and 112, mode management section 104, video selection section 105 and two screen combining section 106, such as I/O interface, microprocessor, image processing LSI' s and other electronic parts are mounted. Board 130 and landscape LCD panel 120 are connected via an external bus of, for example, flexible cable 140.

FIG.3(A) shows a case where connection cable 510 is connected to video input terminal 101, which is a D terminal, and connection cable 520 is not connected to video input terminal 102, which is a composite terminal. FIG.3(B) shows a case where connection cables 510 and 520 are connected to video input terminals 101 and 102, respectively.

Now, the operation of the display apparatus configured as above will be described.

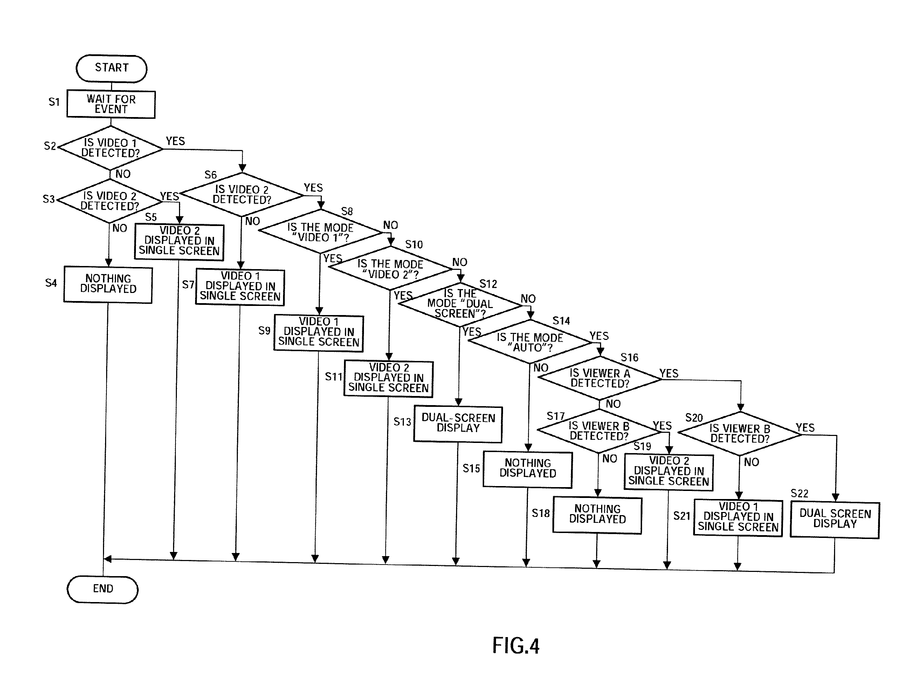

FIG.4 is a flowchart showing a program of auto dual screen processing, which is executed by a CPU constituting control section 110. In the figure, "S" stands for a "step" in the flow.

First, in step S1, video selection section 105 waits for an event to be reported from video 1 detection section 111, video 2 detection section 112, and mode management section 104. Video selection section 105 continues waiting as long as no event is reported. In step S2, the judgment is made as to whether or not video 1 detection section 111 detected video 1, and, if not, in step S3, the judgment is made as to whether or not video 2 detection section 112 detected video 2. If video 2 detection section 112 does not detect video 2, the judgment is made that neither video 1 nor video 2 is detected. that is, it is judged that neither a video 1 source nor a video 2 source is inputted, and, in step S4, the flow ends with no display. When video 2 detection section 112 detected video 2 in the above step S3, in step S5, video 2 is displayed in a single-screen and the flow ends. To be more specific, in step S4, video selection section 105, to which a video 2 detection event is reported from video 2 detection section 112, commands a single-screen display of video 2 to two screen combining section 106, and two screen combining section 106, upon receiving the command, performs control so as to display video 2 in a single screen. Two screen combining section 106 outputs a control signal for a single-screen display of video 2 to the image processing LSI, and the image processing LSI performs a single-screen display of video 2.

As an example of the case where video 1 detection section 111 does not detect video 1 and video 2 detection section 112 detects video 2 and reports this event to video selection section 105, there is, for example, the case shown in FIG.3(A) where a connection cable is not connected to one of the video input terminals. When connection cable 510 is not connected to video input terminal 101 where video 1 is inputted and connection cable 520 is connected to video input terminal 102 where video 2 is inputted, the connected video (here, video 2) is given in a full-image display in a single screen.

Now, the plugging and unplugging of connection cables 510 and 520 in and from video input terminals 101 and 102 will be described. When connection cable 510 or connection cable 520 is inserted into video input terminal 101 or video input terminal 102 connected to board 130 of display apparatus 100, video 1 detection section 111 or video 2 detection section 112 detects a video signal input to the video input terminal and reports a video signal input event to video selection section 105. Video selection section 105 receives the report of video signal input to the video input terminal, from video 1 detection section 111 or from video 2 detection section 112. Further, video 1 or video 2 from video input terminal 101 (video 1 input section) or video terminal 102 (video 2 input section) is inputted to two screen combining section 106, and two screen combining section 106 receives video selection commands from video selection section 105, performs screen combining such as "single-screen display of video 1", "single-screen display of video 2", "dual-screen display", or "auto detection", and outputs the result to landscape LCD panel 120 via flexible cable 140. On the other hand, when connection cable 510 or connection cable 520 is unplugged from input terminal 101 or video input terminal 102, video 1 detection section 111 or video 2 detection section 112 detects a no-signal state in which no video signal is inputted to the video input terminal, and reports a no-video signal event to videoselectionsection105. Video selection section 105 receives a report of a video input to the video input terminal from video 1 detection section 111 or video 2 detection section 112, performs screen combining such as the changes from a "dual-screen display" to a "single-screen display of video 1" and "single-screen display of video 2", and outputs the result to landscape LCD panel 120 via flexible cable 140.

Returning to the flow of FIG.4, when video 1 detection section 111 detected video 1 in step S2 and the judgment is made as to whether or not video 2 detection section 112 detected video 2 in step S6m and, if video 2 is not detected, in step S7, video 1 is displayed in a single-screen and the flow ends . When video 2 detection section 112 detected video 2 in the above step S6, in step S8 mode management section 104 judges whether or not the mode is "video 1." Mode management section 104 is able to hold inside one of the four modes "video 1", "video 2", "dual screen" or "auto", and switches the internal states based on the selections of video 1 single-screen display button 103a, video 2 single-screen display button 103b, dual-screen display button 103c, or auto detection button 103d of operation section 103. Internal state changes are reported to video selection section 105 as events. When the mode is "video 1" in the above step S8, in step S9, video 1 is displayed in a single screen and the flow ends. In this case, video 1 and video 2 are inputted to both the video input terminals of video input terminal 101 and video input terminal 102, and yet video 1 may be displayed in a single screen the mode selection by the user (assuming cases where the user wants to view video 1 on a large screen).

When the mode is not "video 1" in the above step S8, in step S10, mode management section 104 judges whether or not the mode is "video 2," and, if the mode is "video 2", in step S11, video 2 is displayed in a single screen and the flow ends.

When the mode is not "video 2" in the above step S10, in step S12, mode management section 104 judges whether or not the mode is "dual screen" and, if the mode is "dual screen", in step S13, video 1 and video 2 are displayed in dual screens and the flow ends. For example, as shown in FIG.3(B), when connection cables 510 and 520 are connected to both video input terminals 101 and 102 and the mode is "dual screen," a dual-screen display is provided.

When the mode is not "dual screen" in the above step S12, in step S14, mode management section 104 judges whether or not the mode is "auto," and, if the mode is not "auto", in step S15, the flow ends with no display. According to the present embodiment, when a mode is not set by the user, the judgment is made that the viewer is not viewing anything, even if there is video input to both video input terminals 101 and 102, and thus no video is displayed. In this case, the usability of the GUI (Graphical User Interface) may be improved by displaying on landscape LCD panel 120 a message indicating that there is video signal input using an OSD (On Screen Display) function, for example.

When the mode is "auto" in the above step S14, the process moves onto the process of automatically optimizing the display screen according to whether or not passengers (viewers) are seated in the backseats, in the following steps. That is, in step 516, seat sensor 301 (viewer 1 detection section) detects whether or not passenger (viewer) A is seated on the left side of the backseats, and, when passenger (viewer) A is not detected to be seated on the left side of the backseats, in step S17, seat sensor 302 (viewer 2 detection section) detects whether or not passenger (viewer) B is seated on the right side of the backseats. If passenger (viewer) B is not detected to be seated on the right side of the backseats, the judgment is made that there are no passengers in the backseats, and, in step ST18, the flow ends with no display.

When passenger (viewer) B is detected to be seated on the right side of the backseats in step S17, in step S19, video 2 is displayed in a single screen and the flow ends. By this means, passenger (viewer) B can view video 2 that he or she selected on a large screen. Furthermore, in this state, the user (currently viewer B) may select the "dual screen" mode. In this case, video 2 is displayed on the screen on the closer side to passenger (viewer) B on the right side of the backseats. Further, when two screens are displayed on Landscape LCD panel 120, the video (not limited to video 2) is displayed on the closer screen to the passenger (viewer).

When passenger (viewer) A is detected to be seated on the left side of the backseats in the above step S16, in step S20, seat sensor 302 (viewer 2 detection section) detects whether or not passenger (viewer) B is seated on the right side of the backseats. If passenger (viewer) B is not detected to be seated on the right side of the backseats, the judgment is made that passenger (viewer) Aon the left side of the backseats alone is in the backseats, and, in step ST21, video 1 is displayed in a single screen and the flow ends. By this means, passenger (viewer) A is able to view video 1 that he or she selected on a large screen. When passenger (viewer) B is detected to be seated on the right side of the backseats in step S20, the judgment is made that passengers (viewers) A and B are on the left and right sides of the backseats, respectively, and, in step S22, video 1 viewed by passenger (viewer) A is displayed on the left display screen of landscape LCD panel 120 and video 2 viewed by passenger (viewer) B is displayed on the right display screen of landscape LCD panel 120, so that the screens appear side by side, and the flow ends. Thus, passengers (viewers) A and B each can view the video source he or she wants to view in the display screen that is closer to him or her. For example, as shown in FIG.3(B), a dual-screen display where video 1 (such as a television video) is viewed by passenger (viewer) A on the left display screen of landscape LCD panel 120 and video 2 (such as a DVD video) is viewed by passenger (viewer) B on the right display screen of landscape LCD panel 120, is possible. In this manner, either of the video sources can be shown in a single-screen display on landscape LCD panel 120 by the mode selection by passenger (viewer) A or B. Further, when one of the video input terminals is unplugged during a dual-screen display, the input video of the video input terminal that was not unplugged, automatically switches to a single-screen display.

As described above, according to the present embodiment, display apparatus 100 comprises video selection section 105 that selects video based on the output of video 1 detection section 111, video 2 detection section 112, modemanagement section 104, and seat sensors 301 and 302; two screen combining section 106 that combines the screens of videos 1 and 2 inputted from video input terminals 101 and 102 based on a control signal of video selection section 105; and landscape LCD panel 120 that displays the video signals outputted from two screen combining section 106, and displays the video inputted to video input terminals 101 and 102 in accordance with the detection results in video 1 detection section 111 and video 2 detection section 112 in a full screen or in two, left and right screens of landscape LCD panel 120, thereby enabling passengers (viewers) A and B to automatically switch between a single-screen display and a dual-screen display by simply plugging in or unplugging connection cables 510 and 520 corresponding to video input terminals 101 and 102, which are D terminals, etc., so that viewers seated in the backseats of a vehicle are able to switch display screen quickly and at ease without performing operations such a pressing switches.

To be more specific, according to the present invention, because the viewer enables a mode using operation section 103, the optimum input video display is achieved in accordance with viewer' s needs. Further, the locations of the viewers seated in the backseats are detected by seat sensors 301 and 302, thereby enabling the optimum input video to be displayed display in one part in a dual-screen display in accordance with viewer positions or displayed in a single wide-screen display. As a result, in either case, a display apparatus is achieved that the user is able to use at ease and view comfortably.

The above descriptions are illustrations of the preferred embodiments of the present invention, but the scope of the invention is not limited thereto. For example, while the embodiment was described using an example where a display apparatus viewed from the backseats of a vehicle was applied as the display apparatus, the display apparatus applied may be another similar display apparatus mounted in a vehicle. Further, the configuration examples of FIG.1 to FIG.3 are merely examples, and any type of configuration, such as a configuration with three or more seats and video inputs, may be applied.

Further, while the present embodiment describes a display apparatus installed inside a vehicle, as long as the display apparatus requires user operation and is installed in a confining space that deteriorates operability, even if installed in a location other than inside a vehicle, any type of display apparatus is applicable.

Although the above embodiment uses the term "display apparatus", this term is used for the sake of convenience and of course may be, for example, "vehicle-mounted display apparatus" or "vehicle-mounted electronic device" as well.

Furthermore, the types, quantities, and connection method of each circuit section, such as the image input terminals, constituting the above display apparatus are not limited to those of the above embodiment.

Further, with the above display apparatus, a program for operating the display apparatus is also realized. This program is stored in a recording medium that is readable on a computer.

The display apparatus according to the present invention is effective as a vehicle-mounted display apparatus installed inside the interior of a vehicle. Further, because the display apparatus allows a person other than the driver to switch and operate the various video sources, the display apparatus is effective with respect to user-friendliness as well. Further, the present invention may be applied to the applications of products that have a plurality of display apparatuses that include a display section and operation section. Further, the present invention is suitable for use as a display apparatus that requires user operation and is installed in a confining space that deteriorates operability, even in locations other than inside a vehicle.

The disclosures of Japanese Patent Application No.2006-079781 filed on March 22, 2006, including the specifications, drawings and abstracts, are incorporated herein by reference in their entirety.

## Claims

1. A display apparatus comprising:
a display section that is installed in an interior of a vehicle and that displays video on a display screen;
a video input terminal that receives as input a plurality of videos;
a video input detection section that detects a video input in the video input terminal; and a control section that, in accordance with a detection result in the video input detection section, displays at least one of the videos inputted to the video input terminal in a full screen or in a split screen on the display screen.

2. The display apparatus according to claim 1, wherein, when the video input is detected by the video input detection section, the control section starts the display section and displays the input video in the full screen or on in split screen on the display screen.

3. The display apparatus according to claim 1, further comprising a mode setting section that sets as mode conditions to display in the full screen or in the split screen on the display screen,
wherein the control section displays the video inputted to the video input terminal in accordance with the mode setting.

4. The display apparatus according to claim 1, comprising a viewer detection section that detects a position of a viewer,
wherein the control section displays input video in a full screen or in a split screen on the display screen, according to the position of the viewer detected by the viewer detection section.
